# EUROPEAN PATENT APPLICATION

(11) **EP 4 099 201 A1**
(43) Date of publication of application: **07.12.2022**
(21) Application number: 20923549.8
(22) Date of filing: 23.12.2020
(51) Int. Cl.: G06F 21/44

(54) **AUTHENTICATION SYSTEM, COMMUNICATION DEVICE, INFORMATION DEVICE, AND AUTHENTICATION METHOD**

(30) Priority: 04.03.2020 JP 2020037261
(71) Applicant: NTT Communications Corporation, Tokyo 100-8019 (JP)
(72) Inventor: UCHIYAMA, Takamasa, Tokyo 100-8019 (JP); WATANABE, Hiromi, Tokyo 100-8019 (JP)
(74) Representative: Brevalex
(86) International application number: PCT/JP2020/048173
(87) International publication number: WO 2021/176814

(57) **Abstract**

An authentication method performed by an authentication system that is equipped with a communication apparatus to which an authentication information storage device for recording authentication information is connected, and an information apparatus that communicates with the communication apparatus includes executing first authentication processing for authenticating the information apparatus, executing any one of second authentication processing for authenticating, by the information apparatus, the communication apparatus and relaying communication of second authentication processing for authenticating, by the information apparatus, the authentication information storage device, and performing specific information processing when authentication is performed in both the first authentication processing and the second authentication processing.

## Description

### [TECHNICAL FIELD]

The present invention relates to an authentication technology of a communication apparatus.

Priority is claimed on Japanese Patent Application No. 2020-037261, filed on March 4, 2020, the entire content of which is incorporated herein by reference.

### [BACKGROUND ART]

In recent years, various apparatuses, with sensors and surveillance cameras as typical examples, have been connected to networks as Internet of Things (IoT) devices. IoT services that create new added value by using these IoT devices are expected to spread in various fields.

Such IoT devices are widely connected to networks, and thereby security risks for the IoT devices increase. For such security risks, technologies such as cryptographic communication using transport layer security (TLS) and client authentication using an identifier (ID) and a password are being applied (for example, refer to Patent Literature 1).

### [Citation List]

### [Patent Literature]

[Patent Literature 1]
Japanese Unexamined Patent Application, First Publication No. 2009-206568

### [Summary of Invention]

### [Technical Problem]

However, the conventional security techniques are mainly "for humans" designed on the premise of ensuring security in client terminals used by humans. For this reason, when these security technologies are applied to IoT devices, problems arise because IoT devices are "for things." For example, when an ID and a password are used, there is a problem that there is a high risk of password prediction, leakage, local analysis, and the like. In addition, there are problems that the security risks increase due to the use of a common ID and password in a plurality of IoT devices, and that it is difficult to change the ID and password. Use of a digital certificate instead of an ID and a password can be considered. However, even when a digital certificate is used, there is a problem that there is a high risk of local analysis of a private key. In addition, there are other problems that the security risk increases due to the use of a common digital certificate for a plurality of IoT devices, and that there is a high cost of changing and operating the digital certificate (financial cost, labor cost, and the like).

In view of the circumstances described above, an object of the present invention is to provide a technology capable of performing authentication of an apparatus at a lower cost.

### [Solution to Problem]

According to one aspect of the present invention, in an authentication system that is equipped with a communication apparatus to which an authentication information storage device for recording authentication information is connected, and an information apparatus that communicates with the communication apparatus, the communication apparatus includes a first authentication device configured to execute first authentication processing for authenticating the information apparatus, a second authentication device configured to execute second authentication processing for authenticating, by the information apparatus, the communication apparatus or to relay communication of second authentication processing for authenticating, by the information apparatus, the authentication information storage device, and an information processor configured to perform specific information processing by communicating with the information apparatus when authentication is performed in both the first authentication processing and the second authentication processing, and the information apparatus includes a first authentication device configured to execute the first authentication processing for authenticating, by the communication apparatus, the information apparatus, a second authentication device configured to execute the second authentication processing, and an information processor configured to perform specific information processing by communicating with the communication apparatus when authentication is performed in both the first authentication processing and the second authentication processing.

According to the aspect of the present invention, in the authentication system described above, the communication apparatus further includes a cryptographic communication device that forms a cryptographic communication path with the information apparatus, and the information apparatus further includes a cryptographic communication device that forms the cryptographic communication path with the communication apparatus.

According to the aspect of the present invention, in the authentication system described above, the authentication information storage device is a SIM medium or an embedded SIM medium.

According to the aspect of the present invention, in the authentication system described above, the second authentication device of the communication apparatus and the second authentication device of the information apparatus execute the second authentication processing by performing communication using the cryptographic communication path.

According to another aspect of the present invention, a communication apparatus in an authentication system that is equipped with the communication apparatus to which an authentication information storage device for recording authentication information is connected, and an information apparatus that communicates with the communication apparatus includes a first authentication device configured to execute first authentication processing for authenticating the information apparatus, a second authentication device configured to execute second authentication processing for authenticating, by the information apparatus, the communication apparatus or to relay communication of second authentication processing for authenticating, by the information apparatus, the authentication information storage device, and an information processing device configured to perform specific information processing by communicating with the information apparatus when authentication is performed in both the first authentication processing and the second authentication processing.

According to still another aspect of the present invention, an information apparatus in an authentication system that is equipped with a communication apparatus to which an authentication information storage device for recording authentication information is connected, and the information apparatus that communicates with the communication apparatus incudes a first authentication device configured to execute first authentication processing for authenticating, by the communication apparatus, the information apparatus, a second authentication device configured to execute second authentication processing for authenticating, by the information apparatus, the communication apparatus or to relay communication of second authentication processing for authenticating, by the information apparatus, the authentication information storage device, and an information processor configured to perform specific information processing by communicating with the communication apparatus when authentication is performed in both the first authentication processing and the second authentication processing.

According to still another aspect of the present invention, an authentication method performed by an authentication system that is equipped with a communication apparatus to which an authentication information storage device for recording authentication information is connected, and an information apparatus that communicates with the communication apparatus includes executing first authentication processing for authenticating the information apparatus, executing second authentication processing for authenticating, by the information apparatus, the communication apparatus or relaying communication of second authentication processing for authenticating, by the information apparatus, the authentication information storage device, and performing specific information processing when authentication is performed in both the first authentication processing and the second authentication processing.

### [Advantageous Effects of Invention]

According to the present invention, it is possible to perform authentication of an apparatus at a lower cost.

### [BRIEF DESCRIPTION OF DRAWINGS]

Fig. 1 is a schematic block diagram which shows a system configuration of an authentication system 100.
Fig. 2 is a schematic block diagram which shows a functional configuration of an authentication information storage device 10.
Fig. 3 is a schematic block diagram which shows a functional configuration of a communication apparatus 20.
Fig. 4 is a schematic block diagram which shows a functional configuration of an information apparatus 30.
Fig. 5 is a schematic block diagram which shows a functional configuration of an authentication server 50.
Fig. 6 is a schematic sequence chart which shows an outline of processing of the authentication system 100.
Fig. 7 is a sequence chart which shows a specific example of the processing of the authentication system 100.
Fig. 8 is a schematic block diagram which shows a system configuration of a modified example of the authentication system 100.
Fig. 9 is a schematic block diagram which shows a functional configuration of a modified example of the authentication information storage device 10.

### [Description of Embodiments]

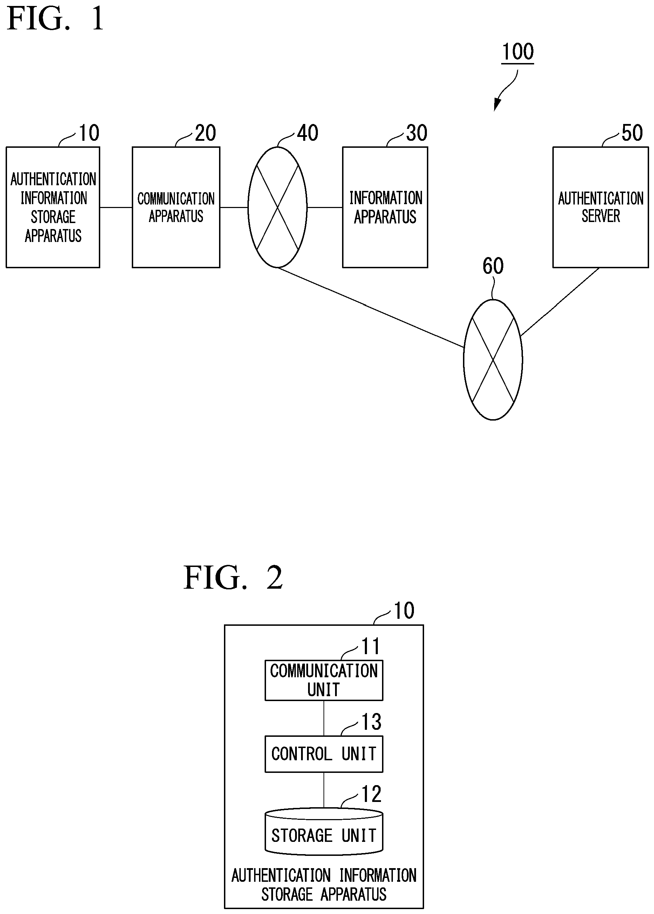

Hereinafter, a specific configuration example of the present invention will be described with reference to the drawings. Fig. 1 is a schematic block diagram which shows a system configuration of the authentication system 100. The authentication system 100 includes an authentication information storage device 10, a communication apparatus 20, an information apparatus 30, and an authentication server 50. The communication apparatus 20 forms a cryptographic communication path with the information apparatus 30, and receives authentication by transmitting verified information according to authentication information recorded in advance in the authentication information storage device 10 to the information apparatus 30 using the cryptographic communication path. The information apparatus 30 authenticates the communication apparatus 20 to which the authentication information storage device 10 is connected by allowing the authentication server 50 to verify the verified information of the authentication information storage device 10. Hereinafter, details of the authentication system 100 will be described.

The authentication information storage device 10 and the communication apparatus 20 are communicably connected. A communication form for connecting the authentication information storage device 10 and the communication apparatus 20 may be wired communication or wireless communication. For example, the authentication information storage device 10 may be connected to the communication apparatus 20 using a cable such as a Universal Serial Bus (USB). For example, the authentication information storage device 10 may be connected to the communication apparatus 20 by bringing a terminal of the authentication information storage device 10 into contact with a connector provided in the communication apparatus 20. For example, the authentication information storage device 10 may be connected to the communication apparatus 20 using non-contact communication.

The communication apparatus 20 and the information apparatus 30 are communicably connected. For example, the communication apparatus 20 and the information apparatus 30 are communicably connected via a first network 40. The first network 40 may be a network using wireless communication or a network using wired communication. The first network 40 may be configured by combining a plurality of networks. The first network 40 may be, for example, a network such as a local area network (LAN). The first network 40 may be, for example, the Internet.

The information apparatus 30 and the authentication server 50 are communicably connected. For example, the information apparatus 30 and the authentication server 50 may be connected via the first network 40 and a second network 60. The first network 40 is as described above. For example, the second network 60 may be a network using wireless communication or a network using wired communication. The second network 60 may be configured by combining a plurality of networks. The second network 60 may be, for example, a network such as a LAN. The second network 60 may be, for example, the Internet.

Fig. 2 is a schematic block diagram which shows a functional configuration of the authentication information storage device 10. The authentication information storage device 10 may be, for example, an integrated circuit (IC) chip, or may be an apparatus in which an IC chip is mounted on a plastic or metal medium such as a subscriber identity module (SIM) card. The authentication information storage device 10 may be configured using, for example, an embedded SIM. The authentication information storage device 10 may be implemented in, for example, a housing different from the communication apparatus 20 and communicably connected with the communication apparatus 20 by a cable or the like, or may be implemented in a form of being mounted inside the communication apparatus 20 or a form of being embedded in the communication apparatus 20. The authentication information storage device 10 may be mounted inside the communication apparatus 20 as if it were a device integrated with the communication apparatus 20 so that it cannot be removed. The authentication information storage device 10 may be implemented as any device as long as it can record authentication information with tamper resistance exceeding a predetermined reference, and output verified information according to the authentication information. For example, the authentication information storage device (information storage apparatus) 10 includes a communication unit (communication device) 11, a storage unit (storage device) 12, and a control unit (controller) 13.

The communication unit 11 is a communication interface for communicating with the communication apparatus 20. For example, when USB communication is performed with the communication apparatus 20, the communication unit 11 may be configured as a USB connector. For example, when contact communication is performed with the communication apparatus 20, the communication unit 11 may be configured as a terminal corresponding to a connector or a socket provided in the communication apparatus 20.

The storage unit 12 is configured as a storage device such as a magnetic hard disk device or a semiconductor storage device. When the authentication information storage device 10 is a SIM, the storage unit 12 is configured as a non-volatile memory mounted in the secure chip. The storage unit 12 stores authentication information. The authentication information may be configured using, for example, a multi-digit number or alphabet. The authentication information may be a unique number called, for example, international mobile subscriber identity (IMSI).

The control unit 13 is configured by using a processor such as a central processing unit (CPU) and a memory. The control unit 13 operates by executing a program. The program executed by the control unit 13 may be an application program or an applet program. All or a part of functions of the control unit 13 may be realized by using hardware such as an application specific integrated circuit (ASIC), a programmable logic device (PLD), and a field programmable gate array (FPGA). When the authentication information storage device 10 is a SIM or an IC card, the control unit 13 is a processor mounted on a secure chip. The control unit 13 reads authentication information from the storage unit 12 in response to a request of the communication apparatus 20, and performs processing for receiving authentication with a predetermined apparatus (for example, the information apparatus 30). Such processing executed by the control unit 13 may be, for example, processing performed by secure channel protocol 03 (SCP03).

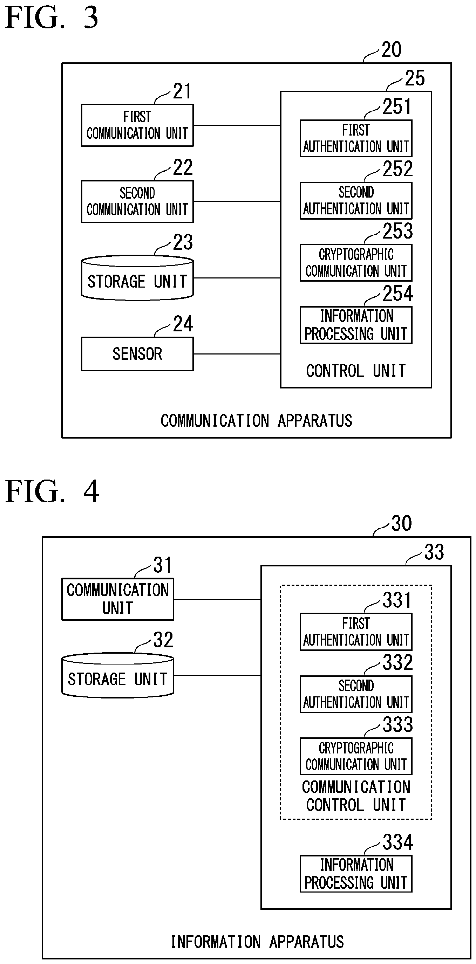

Fig. 3 is a schematic block diagram which shows a functional configuration of the communication apparatus 20. The communication apparatus 20 may be a device capable of information processing such as a programmable logic controller (PLC) or a single board computer. The communication apparatus 20 may be, for example, a device (a so-called smart sensor) in which a communication function or an information processing function is provided on a specific sensor. The communication apparatus 20 may be, for example, a device provided with dedicated hardware for performing information processing necessary for communication performed with the information apparatus 30 on a specific sensor. For example, the communication apparatus 20 includes a first communication unit (first communication device) 21, a second communication unit (second communication device) 22, a storage unit (storage device) 23, a sensor 24, and a control unit (controller) 25.

The first communication unit 21 is a communication interface for communicating with the authentication information storage device 10. For example, when USB communication is performed with the authentication information storage device 10, the first communication unit 21 may be configured as a USB connector. For example, when contact communication is performed with the authentication information storage device 10, the first communication unit 21 may be configured as a connector or a socket connected to a terminal provided in the authentication information storage device 10.

The second communication unit 22 is a communication interface for communicating with the information apparatus 30. For example, when communication is performed with the information apparatus 30 via a LAN, the second communication unit 22 is configured as a communication interface for connecting to a LAN. For example, when communication is performed with the information apparatus 30 via a wireless LAN, the second communication unit 22 is configured as a communication interface for connecting to the wireless LAN.

The storage unit 23 is configured as a storage device such as a magnetic hard disk device or a semiconductor storage device. The storage unit 23 stores programs and data necessary for the operation of the communication apparatus 20.

The sensor 24 acquires numerical values and signals indicating specific events. For example, the sensor 24 may be configured using any sensor such as a temperature sensor, a humidity sensor, an angle sensor, a speed sensor, and an angular speed sensor.

The control unit 25 is configured by using a processor such as a CPU and a memory. All or a part of functions of the control unit 25 may be realized by using hardware such as the ASIC, PLD, or FPGA. The control unit 25 functions as a first authentication unit (first authentication device) 251, a second authentication unit (second authentication device) 252, a cryptographic communication unit (cryptographic communication device) 253, and an information processing unit (information processor) 254 by executing a program stored in the storage unit 23.

The first authentication unit 251 performs first authentication processing with the information apparatus 30. The first authentication processing is processing for authenticating that at least the information apparatus 30 is a legitimate device. The first authentication processing may be implemented so that other processing can be furthermore performed as long as it is possible to authenticate that the information apparatus 30 is a legitimate device. The first authentication processing may be, for example, authentication processing using a digital certificate stored in advance in the information apparatus 30. The first authentication processing may be, for example, processing performed by TLS or authentication processing by secure shell (SSH).

The second authentication unit 252 performs second authentication processing with the information apparatus 30. The second authentication processing is processing for authenticating that at least the communication apparatus 20 is a legitimate device. The second authentication processing may be implemented so that other processing (for example, processing for authenticating that the information apparatus 30 is a legitimate device) can be also performed as long as it is possible to authenticate that the communication apparatus 20 is a legitimate device. The second authentication processing may be, for example, authentication processing using authentication information stored in advance in the authentication information storage device 10. The second authentication processing may be, for example, processing performed by the SCP03, or may also be authentication processing performed by using extensible authentication protocol (EAP)-SIM. The second authentication unit 252 may perform, for example, processing of relaying the second authentication processing performed between the authentication information storage device 10 and the information apparatus 30.

The cryptographic communication unit 253 performs cryptographic communication with the information apparatus 30. The cryptographic communication unit 253 may perform cryptographic communication using, for example, a cryptographic communication path realized by executing the first authentication processing. In this case, the cryptographic communication unit 253 may be configured to be integrated with the first authentication unit 251. The cryptographic communication performed by the cryptographic communication unit 253 may be realized by using any protocol.

The information processing unit 254 performs specific information processing by communicating with the information apparatus 30. When the information processing unit 254 communicates with the information apparatus 30, the cryptographic communication realized by the cryptographic communication unit 253 is used. The information processing unit 254 may perform, for example, processing of registering an output of the sensor 24 in a database of the information apparatus 30 by using structured query language (SQL) with the information apparatus 30. The information processing unit 254 may function as a client to a web service provided by, for example, the information apparatus 30.

Fig. 4 is a schematic block diagram which shows a functional configuration of the information apparatus 30. The information apparatus 30 is configured by, for example, using an information processing device such as a personal computer or a server device. For example, the information apparatus 30 includes a communication unit (communication device) 31, a storage unit (storage device) 32, and a control unit (controller) 33.

The communication unit 31 is a communication interface for communicating with the communication apparatus 20 and the authentication server 50. For example, when communication is performed with the communication apparatus 20 via the first network 40, the communication unit 31 is configured as a communication interface for connecting to the first network 40. Even when communication with the authentication server 50 is performed via the first network 40 and the second network 60, the communication unit 31 is configured as a communication interface for connecting to the first network 40. For example, when the first network 40 is a LAN, the communication unit 31 is configured as a communication interface for connecting to the LAN. For example, when the first network 40 is a wireless LAN, the communication unit 31 is configured as a communication interface for connecting to the wireless LAN. If communication with the communication apparatus 20 and communication with the authentication server 50 are performed using communication routes that are completely different from each other, the communication unit 31 may be configured by using a plurality of communication interfaces.

The storage unit 32 is configured as a storage device such as a magnetic hard disk device or a semiconductor storage device. The storage unit 32 stores programs and data necessary for the operation of the information apparatus 30.

The control unit 33 is configured by using a processor such as a CPU and a memory. All or a part of functions of the control unit 33 may be realized by using hardware such as the ASIC, PLD or FPGA. The control unit 33 functions as a communication control unit (communication controller) and an information processing unit (information processor) 334 by executing a program stored in the storage unit 32. The communication control unit functions as a first authentication unit (first authentication device) 331, a second authentication unit (second authentication device) 332, and a cryptographic communication unit (cryptographic communication device) 333.

The first authentication unit 331 performs the first authentication processing with the communication apparatus 20. The first authentication unit 331 may perform, for example, the authentication processing using a digital certificate stored in advance in the storage unit 32 as the first authentication processing. The second authentication unit 332 performs the second authentication processing with the communication apparatus 20. The second authentication unit 332 may make an authentication request to the authentication server 50 in order to authenticate the authentication information storage device 10 or the communication apparatus 20 in a process of the second authentication processing. In this case, the second authentication unit 332 authenticates the authentication information storage device 10 or the communication apparatus 20 on the basis of an authentication response received from the authentication server 50. The cryptographic communication unit 333 performs cryptographic communication with the communication apparatus 20. The information processing unit 334 performs specific information processing by communicating with the communication apparatus 20. The information processing unit 334 may operate as a database server using, for example, SQL.

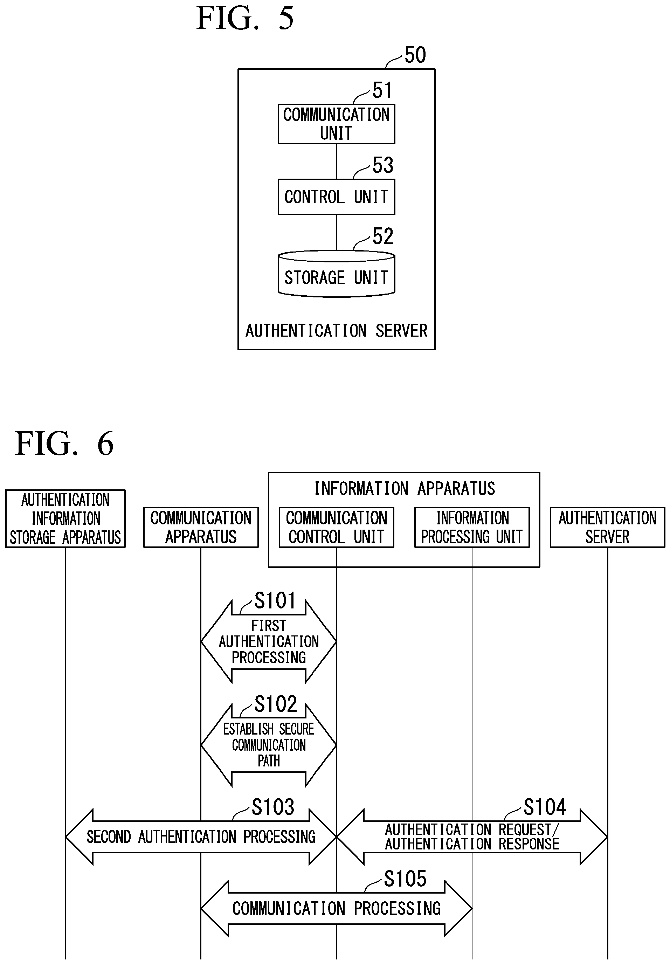

Fig. 5 is a schematic block diagram which shows a functional configuration of the authentication server 50. The authentication server 50 is configured by, for example, using an information processing device such as a personal computer or a server device. For example, the authentication server 50 may be configured using, for example, a remote authentication dial in user service (RADIUS) server.

The communication unit (communication device) 51 is a communication interface for communicating with the information apparatus 30. For example, when communication with the information apparatus 30 is performed via the first network 40 and the second network 60, the communication unit 51 is configured as a communication interface for connecting to the second network 60.

The storage unit (storage device) 52 is configured as a storage device such as a magnetic hard disk device or a semiconductor storage device. The storage unit 52 stores programs and data necessary for the operation of the authentication server 50.

The control unit (controller) 53 is configured by using a processor such as a CPU and a memory. All or a part of functions of the control unit 53 may be realized by using hardware such as an ASIC, a PLD, or an FPGA. The control unit 53 executes a program stored in the storage unit 52, thereby executing the authentication processing requested by the information apparatus 30, and responding a result of the authentication to the information apparatus 30.

Fig. 6 is an outline sequence chart which shows an outline of processing of the authentication system 100. First, the control unit 25 of the communication apparatus 20 and a communication control unit of the information apparatus 30 perform the first authentication processing (step S101). In the first authentication processing, when it is authenticated that the information apparatus 30 is a legitimate device, the control unit 25 of the communication apparatus 20 and a communication control unit of the information apparatus 30 establish a secure communication path (step S102). In other words, the control unit 25 of the communication apparatus 20 and the communication control unit of the information apparatus 30 establish a communication path for performing cryptographic communication.

After that, the control unit 25 of the communication apparatus 20 and the communication control unit of the information apparatus 30 perform the second authentication processing using the secure communication path established in step S102 (step S103). The second authentication processing may be performed between the control unit 13 of the authentication information storage device 10 and the communication control unit of the information apparatus 30 via the control unit 25 of the communication apparatus 20. In a process of the second authentication processing, the communication control unit transmits an authentication request to the authentication server 50, and the authentication server 50 transmits an authentication response indicating a result of the authentication to the communication control unit (step S104). The second authentication processing is performed on the basis of the result of the authentication in the authentication server 50. The communication apparatus 20 performs communication processing with the information processing unit 334 of the information apparatus 30 by using a session made by executing the second authentication processing (step S105).

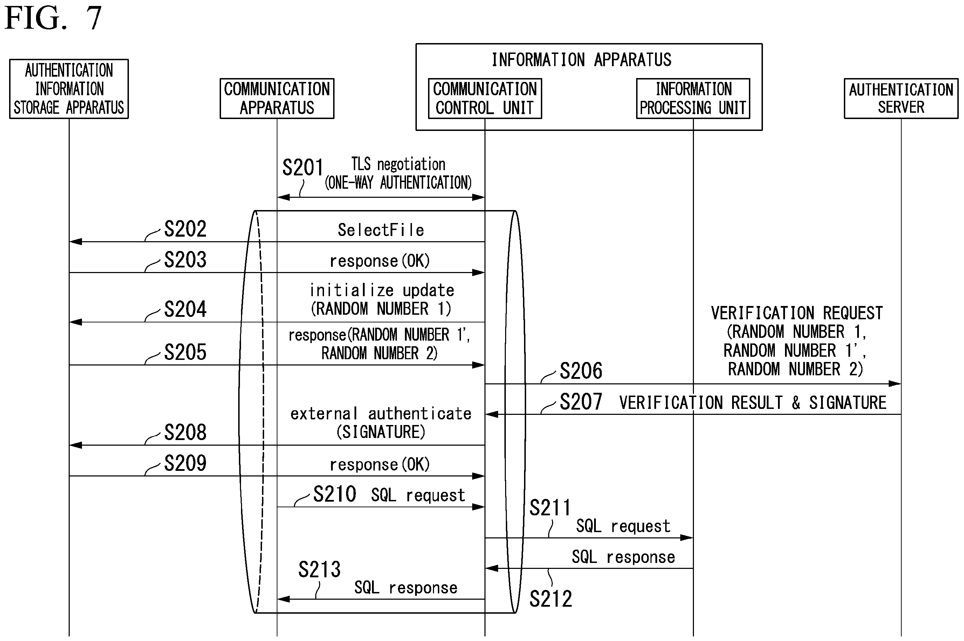

Fig. 7 is a sequence chart which shows a specific example of processing of the authentication system 100. First, TLS negotiation is performed between the communication apparatus 20 and the communication control unit of the information apparatus 30 (step S201). This processing is one-way authentication for authenticating the information apparatus 30. By executing TLS negotiation, the first authentication processing and the establishment of a communication path for cryptographic communication are performed.

Next, processing of SCP03 is performed between the authentication information storage device 10 and the communication control unit of the information apparatus 30 via the communication apparatus 20 (step S202 to step S209). This processing is performed using the communication path of cryptographic communication formed by an implementation of TLS. This processing corresponds to the second authentication processing. In step S206 of the processing of SCP03, a verification request for verified information (a random number 1' and a random number 2) received from the authentication information storage device 10 is transmitted from the communication control unit to the authentication server 50. The authentication server 50 performs verification processing on the basis of this verification request, and transmits a result of the verification and a signature to the information apparatus 30 (step S207). The verification in this processing corresponds to authentication processing in the authentication server 50.

When the authentication information storage device 10 is authenticated by executing the processing of the SCP-03, communication between the information processing unit 254 of the communication apparatus 20 and the information processing unit 334 of the information apparatus 30 is performed by taking over the session of the SCP-03. In a specific example of Fig. 7, an access to the database is performed using SQL (steps S210 to S213).

The authentication system 100 is configured in this manner, thereby it is not necessary to set an ID, a password, and a digital certificate in advance in the communication apparatus 20 that receives authentication. For this reason, it is possible to perform authentication of the communication apparatus 20 at a lower cost. Specifically, it is as follows.

The authentication information storage device 10 is connected to the communication apparatus 20. In the second authentication processing (authentication of the communication apparatus 20) between the communication apparatus 20 and the information apparatus 30, the authentication information recorded in advance in the authentication information storage device 10 is used. This authentication information is recorded in the authentication information storage device 10 having tamper resistance exceeding a predetermined reference. For this reason, a risk of prediction, leakage, local analysis, or the like of authentication information is low, and the need for change is also low. Therefore, it is possible to keep the management cost low while maintaining high security. Even if a digital certificate is used for authentication, the digital certificate is used for the authentication of the information apparatus 30 (so-called server authentication), and the digital certificate is not used for the authentication of the communication apparatus 20 (so-called client authentication). For this reason, as described above, it is possible to keep the management cost low while maintaining high security.

### (Modified example)

The communication apparatus 20 may be configured not to include the sensor 24. The sensor 24 is only a specific example of an apparatus that outputs value used by the information processing unit 254 of the control unit 25.

When the second authentication processing is not executed within a predetermined time elapsed after the first authentication processing is completed, a session in the first authentication processing may be disconnected. This disconnection may be performed by the communication apparatus 20 or may be performed by the information apparatus 30.

The authentication server 50 may be connected to the first network 40. A function of the authentication server 50 may be implemented in the information apparatus 30. That is, the storage unit 52 and the control unit 53 may be implemented in the information apparatus 30.

The communication apparatus 20 may be configured as an IoT Gateway. In this case, the communication apparatus 20 may be configured to communicate with a sensor apparatus externally provided without incorporating the sensor 24. The control unit 25 of the communication apparatus 20 receives an output (a numerical value or a signal indicating a specific event) from the sensor apparatus by communicating with the sensor apparatus. Then, the information processing unit 254 may perform processing of registering the output of the sensor apparatus in the database of the information apparatus 30 by using SQL with the information apparatus 30.

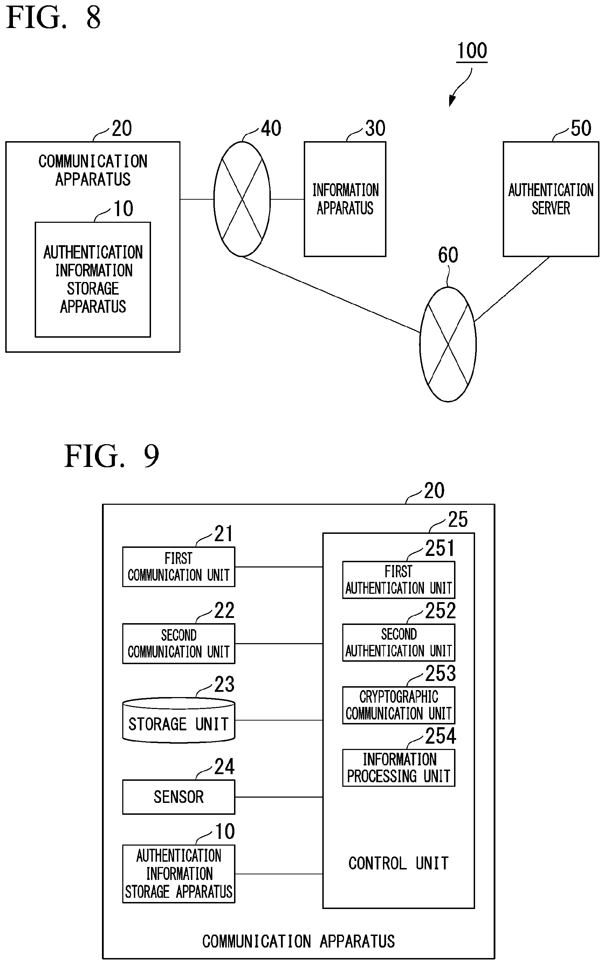

Fig. 8 is a schematic block diagram which shows a system configuration of a modified example of the authentication system 100. Fig. 9 is a schematic block diagram which shows a functional configuration of the modified example of the authentication information storage device 10. In the modified example shown in Figs. 8 and 9, the authentication information storage device 10 is incorporated in the communication apparatus 20 as a part of the communication apparatus 20. For example, when the authentication information storage device 10 is a SIM card or an embedded SIM, the authentication information storage device 10 may be incorporated in the communication apparatus 20 in this manner.

As described above, an embodiment of the present invention has been described in detail with reference to the drawings, but the specific configuration is not limited to this embodiment, and the design and the like within a range not deviating from the gist of the present invention are also included.

### [Industrial Applicability]

The present invention can be used, for example, for authentication of a communication apparatus. According to the present invention, it is possible to perform authentication of an apparatus at a lower cost.

### [Reference Signs List]

100 Authentication system
10 Authentication information storage device
20 Communication apparatus
30 Information apparatus
40 First network
50 Authentication server
60 Second network
11 Communication unit
12 Storage unit
13 Control unit
21 First communication unit
22 Second communication unit
23 Storage unit
24 Sensor
25 Control unit
251 First authentication unit
252 Second authentication unit
253 Cryptographic communication unit
254 Information processing unit
31 Communication unit
32 Storage unit
33 Control unit
331 First authentication unit
332 Second authentication unit
333 Cryptographic communication unit
334 Information processing unit
51 Communication unit
52 Storage unit
53 Control unit

## Claims

1. An authentication system that is equipped with a communication apparatus to which an authentication information storage device for recording authentication information is connected, and an information apparatus that communicates with the communication apparatus,
wherein the communication apparatus includes
a first authentication device configured to execute first authentication processing for authenticating the information apparatus,
a second authentication device configured to execute second authentication processing for authenticating, by the information apparatus, the communication apparatus or to relay communication of second authentication processing for authenticating, by the information apparatus, the authentication information storage device, and
an information processor configured to perform specific information processing by communicating with the information apparatus when authentication is performed in both the first authentication processing and the second authentication processing,
the information apparatus includes
a first authentication device configured to execute the first authentication processing for authenticating, by the communication apparatus, the information apparatus,
a second authentication device configured to execute the second authentication processing, and
an information processor configured to perform specific information processing by communicating with the communication apparatus when authentication is performed in both the first authentication processing and the second authentication processing.

2. The authentication system according to claim 1,
wherein the communication apparatus further includes a cryptographic communication device that forms a cryptographic communication path with the information apparatus, and
the information apparatus further includes a cryptographic communication device that forms the cryptographic communication path with the communication apparatus.

3. The authentication system according to claim 1, wherein the authentication information storage device is a SIM medium or an embedded SIM medium.

4. The authentication system according to claim 2, wherein the second authentication device of the communication apparatus and the second authentication device of the information apparatus execute the second authentication processing by performing communication using the cryptographic communication path.

5. A communication device in an authentication system that is equipped with the communication device to which an authentication information storage device for recording authentication information is connected, and an information apparatus that communicates with the communication device, the communication device comprising:
a first authentication device configured to execute first authentication processing for authenticating the information apparatus,
a second authentication device configured to execute second authentication processing for authenticating, by the information apparatus, the communication device or to relay communication of second authentication processing for authenticating, by the information apparatus, the authentication information storage device, and
an information processor configured to perform specific information processing by communicating with the information apparatus when authentication is performed in both the first authentication processing and the second authentication processing.

6. An information device in an authentication system that is equipped with a communication apparatus to which an authentication information storage device for recording authentication information is connected, and the information device that communicates with the communication apparatus, the information device comprising:
a first authentication device configured to execute first authentication processing for authenticating, by the communication apparatus, the information device,
a second authentication device configured to execute second authentication processing for authenticating, by the information device, the communication apparatus or to relay communication of second authentication processing for authenticating, by the information device, the authentication information storage device, and
an information processor configured to perform specific information processing by communicating with the communication apparatus when authentication is performed in both the first authentication processing and the second authentication processing.

7. An authentication method performed by an authentication system that is equipped with a communication apparatus to which an authentication information storage device for recording authentication information is connected, and an information apparatus that communicates with the communication apparatus, the authentication method comprising:
executing first authentication processing for authenticating the information apparatus,
executing any one of second authentication processing for authenticating, by the information apparatus, the communication apparatus and relaying communication of second authentication processing for authenticating, by the information apparatus, the authentication information storage device, and
performing specific information processing when authentication is performed in both the first authentication processing and the second authentication processing.
